# EUROPÄISCHE PATENTSCHRIFT

(11) **EP 0 697 542 B1**
(45) Veröffentlichungstag und Bekanntmachung des Hinweises auf die Patenterteilung: **13.01.1999**
(21) Anmeldenummer: 95108576.0
(22) Anmeldetag: 03.06.1995
(51) Int. Cl.: F16F 9/46

(54) **Schwingungsdämpfer mit verstellbarer Dämpfkraft**
Adjustable vibration damper
Amortisseur de vibration réglable

(30) Priorität: 07.07.1994 DE 4423526
(43) Veröffentlichungstag der Anmeldung: 21.02.1996
(73) Patentinhaber: Mannesmann Sachs Aktiengesellschaft, 97424 Schweinfurt (DE)
(72) Erfinder: Förster, Andreas, Dipl.-Ing., D-97422 Schweinfurt (DE)

(56) Entgegenhaltungen:
- EP-A- 0 200 446
- EP-A- 0 400 395
- EP-A- 0 572 040
- EP-A- 0 608 427
- DE-A- 4 016 807
- DE-A- 4 406 918
- FR-A- 2 282 071

## Beschreibung

Die Erfindung betrifft einen Schwingungsdämpfer mit verstellbarer Dämpfkraft entsprechend dem Oberbegriff von Patentanmeldung

Der nicht vorveröffentlichten DE 44 06 918 offenbarte Schwingungsdämpfer enthält nach den Ausführungen der Fig. 7 und 8 eine Dämpfventileinrichtung, die nach dem Skyhookprinzip die Dämpfkrafteinstellung vornimmt. Dabei wird eine Dämpfkrafteinstellung durchgeführt, bei der die Dämpfkraft wechselweise zuoder abnimmt. In dem Maße, wie sich die Dämpfkraft für eine Durchströmungsrichtung erhöht, wird sie für die andere Durchströmungsrichtung reduziert oder beibehalten. Dabei kommen mehrere Steuerkanten zum Einsatz, die die Drosselung des Nebenstroms bestimmen. Diese Drosselkanten müssen hinsichtlich der Toleranzen relativ genau abgestimmt sein, damit keine fehlerhafte Einstellung der Dämpfkraft eintritt.

Aus der EP 0 572 040 Al ist ein Schwingungsdämpfer bekannt, der in seinem Kolben verstellbare Dämpfventile aufweist, durch die jeweils ein Hauptstrom fließt. Zur Steuerung der verstellbaren Dämpfventile wird ein Nebenstrom über einen Bypass den verstellbaren Dämpfventilen zugeführt, wobei der hydraulische Druck des Nebenstroms das Öffnungsverhalten der verstellbaren Dämpfventile beeinflußt.

Aufgabe der vorliegenden Erfindung ist es einen Schwingungsdämpfer mit seiner Dämpfventileinrichtung dahingehend zu verbessern, daß eine raumsparende Dämpfventileinrichtung vorliegt, die einen einfachen Aufbau und ein von den Leckverlusten unabhängiges Betriebsverhalten besitzt, so wie ein toleranzunabhängiges Dämpfkraftverhalten aufweist.

Erfindungsgemäß wird die Aufgabe durch den Patentanspruch 1 gelöst.

Die Anzahl der Steuerquerschnitte beschränkt sich gegenüber der Patentanmeldung DE 44 06 918.6, so daß sich zwangsläufig bei gleicher Fertigungsqualität die Toleranzempfindlichkeit des Schwingungsdämpfers, insbesondere der Dämpfventileinrichtung verringert.

In weiterer vorteilhafter Ausgestaltung wird der Steuerquerschnitt des Vorstufenventils von einer Sitzfläche in Kombination mit einer Konusfläche gebildet und sich dem Steuerquerschnitt ein weiterer Durchströmungsquerschnitt anschließt. Sobald ein Steuerquerschnitt für die eine Durchströmungsrichtung wirksam ist, ist der andere Steuerquerschnitt für die entgegengesetzte Durchströmungsrichtung durch den Durchströmungsquerschnitt überbrückt.

Der Durchströmungsquerschnitt bestimmt die Dämpfkrafteinstellung der Dämpfventileinrichtung für das Dämpfmedium in einer Durchströmungsrichtung, die den Steuerquerschnitt nicht passiert. Um trotzdem eine Einstellung der der Dämpfventileinrichtung vornehmen zu können, ist der Durchströmungsquerschnitt über den Aktuatorweg einstellbar.

Die Dämpfventileinrichtung ist vorteilhafter derart ausgeführt, daß zwischen den beiden Steuerquerschnitten eine Strömungsanbindung zu den Rückschlagventilen vorliegt, so daß zwei Teillängen des Durchströmungsquerschnitts entstehen, die jeweils richtungsabhängig wirksam sind. Die Dämpfkraftkennlinie wird immer vom kleinsten Querschnitt bestimmt. Damit der Steuerquerschnitt für die eine Durchströmungsrichtung wirksam und für die andere Durchströmungsrichtung unwirksam ist kann das Dämpfmedium über die Strömungsanbindung einen Steuerquerschnitt umgehen.

Dabei sind die beiden Teillängen der Durchströmungsquerschnitte unterschiedlich ausgebildet. Dadurch kann strömungrichtungsabhängig die Dämpfventileinrichtung über die Durchströmungsquerschnitte genutzt werden. Liegt beispielsweise der Steuerquerschnitt für die Druckrichtung im Wirkbereich, so kann der wirksame Durchströmungsquerschnitt tendenziell hart eingestellt sein. Bei umgekehrter Durchströmungsrichtung kann der Durchströmungsquerschnitt komfortbetont weich sein. Es können Strömungsrichtungsabhängigkeiten über den Durchströmungsquerschnitt erreicht werden, indem beispielsweise die Durchströmungsquerschnitte durch eine Stufung miteinander verbunden sind.

Entsprechend einem weiteren vorteilhaften Merkmal sind die beiden Durchströmungsquerschnitte jeweils innerhalb ihrer Teillängen in Abhängigkeit des Aktuatorwegs einstellbar.

In Abhängigkeit des Durchströmungsquerschnitts, wenn bei einer mittleren Aktuatorstellung beide Steuerquerschnitte außer Eingriff sind, sorgt der Durchströmungsquerschnitt je nach Dimensionierung für eine gewünschte Dämpfkrafteinstellung. Da kann es fahrzeugspezifisch durchaus sein, daß eine mittlere oder harte Dämpfkraftkennlinie eingestellt ist. Alternativ sind bei einer mittleren Aktuatorstellung beide Steuerquerschnitte außer Eingriff und der Durchströmungsquerschnitt sorgt für eine weiche Dämpfkrafteinstellung. Bei dieser Einstellung der Dämpfventileinrichtung ist überhaupt keine Steuerkante im Eingriff, so daß auch keine Dämpfkraftstreuungen auftreten können.

Vorteilhafterweise ist vorgesehen, daß die Dämpfventileinrichtung in der elektrisch stromlosen Stellung in der Zugrichtung hart und in der Druckrichtung weich eingestellt ist. Es handelt sich um einen guten Kompromiss, der trotz einer komfortablen Einstellung in Druckrichtung über eine harte Einstellung in Zugrichtung die Radbewegungen auf einem vertretbaren Niveau hält.

Hinsichtlich eines besonders einfachen Aufbaus der Ventileinrichtung setzt sich der Nebenstrom nach dem Durchströmen eines der Rückschlagventile in den Steuerraum fort. Der Strömungsweg ist dadurch denkbar kurz und konstruktiv einfach umsetzbar.

Anhand der folgenden Figurenbeschreibung soll die Erfindung näher erläutert werden.

Es zeigt:
- Fig. 1: Dämpfventileinrichtung in Gesamtdarstellung
- Fig. 2: Ausschnittdarstellung des Vorstufenventils

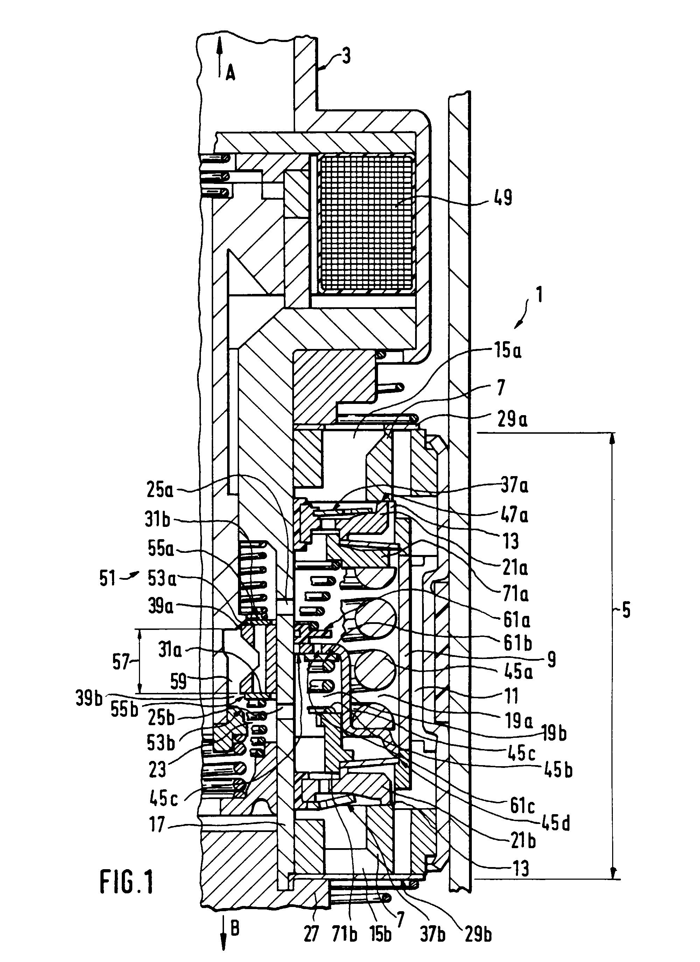

Die Fig. 1 beschränkt sich in Ihrer Darstellung auf eine Dämpfventileinrichtung 1 an einer hohlen Kolbenstange 3. Die Dämpfventileinrichtung 1 umfaßt unter anderem ein Dämpfventilgehäuse 5, das endseitig jeweils einen Dämpfventilkopfkörper 7 und zwischen diesen einen Dämpfventilzwischenkörper 9 aufweist. Der Dämpfventilzwischenkörper 9 und die Dämpfventilkopfkörper 7 besitzen Verbindungskanäle 11, die radiale Anbindungen als Zufluß 13 zu Zuströmöffnungen 15a/b aufweisen. Radial weiter innen, bezogen auf die Verbindungskanäle, bildet ein Zapfenabschnitt 17 der Kolbenstange 3 mit dem Dämpfventilzwischenkörper 9 zwei Steuerräume 19a/b, die axial von jeweils einem Hauptstufenventilkörper 21a/b begrenzt werden. Koaxial zu den Steuerrräumen 19a/b ist ein Vorraum 23 angeordnet, der über radiale Strömungsverbindungen 25a/b mit den Steuerräumen 19a/b angeschlossen ist. Die gesamte Dämpfventileinrichtung 1 wird über eine Mutter 27 mit der Kolbenstange 3 verspannt.

Die Dämpfventileinrichtung 1 weist eine Reihe von Rückschlagventilen auf, die die Strömungsverhältnisse innerhalb der Dämpfventileinrichtung 1 lenken. Zum einen sind die Austrittsöffnungen der Verbindungskanäle 11 mit Rückschlagventilen 29a/b versehen. Jeder Hauptstufenventilkörper 21a/b ist mit einem richtungsabhängig durchlassenden Ventil 37a/b ausgerüstet, das den Zu- und Abfluß zum Steuerraum 19a/b beeinflußt.

Innerhalb des Vorraums 23 ist ein über eine Magnetspule 49 axial verschiebbarer Anker 51 angeordnet. Der Anker 51 weist Steuerquerschnitte 39a/b auf, die eine Verbindung zwischen den Steuerräumen 19a/b über die radilen Strömungsverbindungen 25a/b beeinflussen.

Bei einer Bewegung der Dämpfventileinrichtung 1 in Richtung A muß das Dämpfmedium verdrängt werden, wobei es in die Zuströmöffnung 15a einströmt. Innerhalb der Zuströmöffnung 15a teilt sich das Medium in einen Hauptstrom und einen Nebenstrom auf. Der Nebenstrom fließt durch den Hauptstufenventilkörper 21a und das Ventil 37a in den Steuerraum 19a. In Abhängigkeit des Durchtrittsquerschnitts 39a baut sich im Steuerraum 19a ein Druck auf, der auf den Hauptstufenventilkörper 21a eine Schließkraft ausübt, die von der Kraft einer Schließfeder 45a überlagert wird. Ist die Öffnungskraft im Bereich der Zuströmöffnung 15a größer als die Schließkraft des Steuerraums 19a, so hebt der Hauptstufenventilkörper 21a von einem Ventilsitz 47a ab, womit der Zufluß 13 zu den Verbindungskanälen 11 geöffnet wird.

Der Abfluß des Steuerraums 19a erfolgt über das verstellbare Vorstufenventil und über ein Rückschlagventil 31a, das über die Strömungsverbindung 25b mit dem Steuerraum 19b verbunden ist, aus dem der Nebenstrom über das richtungsabhängig durchlassende Ventil 37b ausströmt.

Während der beschriebenen Hubbewegung schließt das Rückschlagventil 29a die Verbindungskanäle 11, damit der Steuerraum 19a nicht überbrückt wird.

Bei einer Hubbewegung in Richtung B schließt das Rückschlagventil 29b. Das Dämpfmedium passiert das Ventil 37b und baut die Schließkraft für den Hauptstufenventilkörper 21b auf. Über den Steuerraum 19b erfolgt der Abfluß des Nebenstroms. Der Hauptstrom ergießt sich nach dem Abheben des Hauptstufenventilkörpers 21b, der sich, wie der Hauptstufenventilköper 21a am Zapfenabschnitt 17 zentriert, in den Verbindungskanal 11.

Die Dämpfkraft der Dämpfventileinrichtung 1 wird über die Größe der Steuerquerschnittes 39a/b bestimmt, wobei für beide Strömungsrichtungen grundsätzlich der Abfluß des jeweiligen Steuerraums 19 für Dämpfkraftveränderungen benutzt wird.

Zur gegensinnigen Verstellung der Dämpfventileinrichtung werden wechselweise über den Anker 51 gekoppelten Konusflächen 53a/b in Verbindung mit den Sitzflächen 55a/b genutzt. Dabei passiert der Nebenstrom jeweils ein den Steuerquerschnitt 39 überbrückendes Rückschlagventil 31a/b. Jeweils ein Rückschlagventil 31a/b liegt im Strömungspfad des Nebenstroms mit einem Steuerquerschnitt 39a/b. Zwischen den Konusflächen 53 a/b verfügt der Anker 51 über einen Längenabschnitt 57, der zusammen mit den Sitzflächen 53 a/b einen kreisringförmigen Durchströmungsquerschnitt 59 bestimmt. Bildet eine der beiden Konusflächen 55 a/b mit der zugehörigen Sitzfläche 55 a/b einen Steuerquerschnitt 39 a/b, ist die andere Konusfläche von der entsprechenden Sitzfläche so weit beabstandet, daß an dieser Stelle keine Drosselwirkung eintritt. Der Querschnitt wird von dem Durchmesser des Längenabschnitts 57 und der Sitzfläche 55 bestimmt. Dabei besitzt der Durchströmungsquerschnitt 59 eine Strömungsanbindung an die beiden Rückschlagventile 31a/b. Die beiden Rückschlagventile 31a/b sind über den Durchströmungsquerschnitt 59 und die Anbindung den beiden Steuerquerschnitten parallelgeschaltet.

Damit sich auch für beide Durchströmungsrichtungen eine weiche Dämpfkrafteinstellung realisieren läßt, sind bei einem mittleren Anker beide Steuerquerschnitte 39 außer Eingriff. Es wirkt nur der drosselarme Durchströmungsquerschnitt 59 zwischen den Konusflächen 53a/b des Aktuators.

Zur weiteren Anpassung der Dämpfkraft an die Durchströmungsrichtungen kommen zwei Schließfedern 45a,45b zum Einsatz, die aufgrund ihrer besonderen Anordnung keine Abhängigkeiten der Federkräfte für die Hauptstufenventilkörper 21a,21b mit sich bringen. Eine Federführungshülse 45c, die ortsfest zum Dämpfventilzwischenkörper 9 angeordnet ist, dient als Abstützungs-organ für die beiden Federn, so daß sich die Federkräfte nicht gegenseitig beeinflussen. In dieser Darstellung ist die Vorspannkraft der Schließfeder 45a um ein Mehrfaches höher als die der Schließfeder 45b, erfahrungsgemäß etwa um den Faktor 4, so daß die Schließfeder 45a die Lage der Federführungshülse 45c auf einem Absatz 45d des Dämpfventilgehäuses 5 definiert. Alternativ kann die Federführungshülse 45c auch zwischen einem Dämpfventilkopfkörper 7 und dem Dämpfventilzwischenkörper 9 verspannt sein. Die Schließfedern 45 greifen über Abstützkörper 71a/b an die Hauptstufenventilkörper 21a/b an.

Zur Druckbegrenzung der gesamten Dämpfventileinrichtung kommen Rückschlagventile 61 zur Anwendung, die mindestens eine Übertrittsöffnung 61c in der Federführungshülse 45c richtungsabhängig öffnen bzw. schließen. Bei den Rückschlagventilen handelt es sich um federvorgespannte Schließkör-per 61a. Bei einem Überdruck im Steuerraum 19a kann die Abdeckscheibe 61b im Steuerraum 19b abheben und einen Druckabbau über den Steuerraum 19b ermöglichen. Im umgekehrten Fall hebt der Schließkörper 61a von der Federführungshülse 45c ab und gibt einen Ringquerschnitt 61d zwischen dem Kolbenstangenzapfen 17 und der Federführungshülse 45c frei.

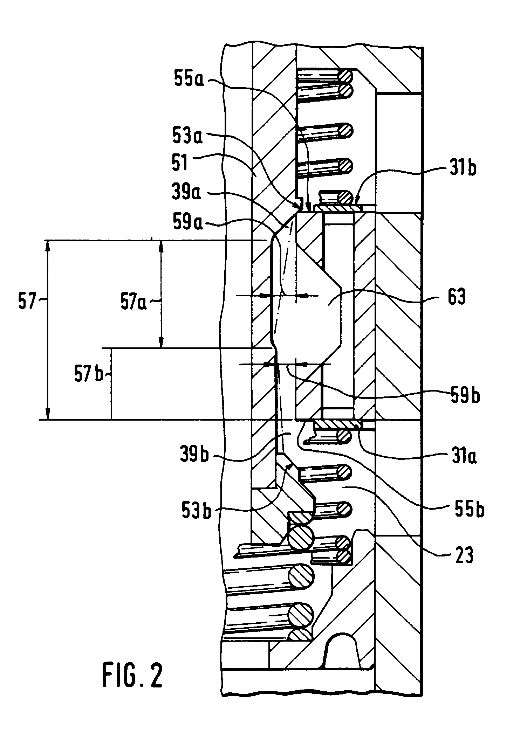

In der Fig. 2 ist der Vorstufenventilbereich 23 zur Verdeutlichung der Wirkungsweise des Durchströmungsquerschnitts 59 vergrößert dargestellt. Grundsätzlich bestimmt der kleinste Abströmquerschnitt im Vorstufenventil 23 (Steuerquerschnitt 39 oder Durchströmungsquerschnitt 59) über den Druckabbau in den jeweiligen Steuerräumen (19a/b Fig. 1) die Dämpfkrafteinstellung der Dämpfventileinrichtung. Wie schon zu Fig. 1 ausgeführt, ist stets nur ein Steuerquerschnitt 39a/b im Eingriff. Für die andere Durchströmungsrichtung ist der Durchströmungsquerschnitt 59 maßgebend. Das heißt, daß für die eine Richtung der Durchströmungsquerschnitt und für die andere Richtung der Steuerquerschnitt die Dämpfkrafteinstellung bestimmen, in dieser konkreten Darstellung der Querschnitt 39a/b.

Wie zusätzlich aus der Fig. 2 entnehmbar ist, ist der Durchströmungsquerschnitt 59 in zwei Teillängen 57a/b in die Einzeldurchströmungsquerschnitte 59a/b unterteilt, die durch einen Absatz voneinander getrennt sind. In diesem Fall sind die Durchströmungsquerschnitte 59a/b innerhalb ihrer Teillängen 57a/b konstant. Daraus folgt, daß eine Verstellung des Steuerquerschnitts keine Änderung des Durchströmungsquerschnitts mitsichziehen würde bzw. sich die Dämpfkrafteinstellung für die eine Arbeitsrichtung ändert und für die andere konstant bleibt.

Wie aus den strichpunktierten Linien erkennbar ist, können die Durchströmungsquerschnitte 59a/b jedoch auch hubabhängig ausgeführt sein, indem beispielsweise, wie gezeigt, die Kontur vom Anker 51 leicht konisch ausgeformt ist. Bei dieser Ausführungsvariante wird in beiden Richtungen über den Ankerhub die Dämpfkrafteinstellung verändert. Beide Durchströmungsquerschnitte 59a/b werden durch die Strömungsanbindung 63 hydraulisch voneinander getrennt, so daß eine Teillänge 57a der Zugrichtung und eine Teillänge 57b der Druckrichtung zugeordnet ist.

## Patentansprüche

1. Schwingungsdämpfer mit verstellbarer Dämpfkraft, umfassend ein dämpfmediumgefülltes Druckrohr, in dem ein Kolben (5) an einer axial beweglichen Kolbenstange (3) einen Arbeitsraum in einen kolbenstangenseitigen und einen kolbenstangenfernen unterteilt, wobei ein Dämpfmittelstrom zwischen den beiden Arbeitsräumen vorliegt, der sich in einen Hauptstrom und einen Nebenstrom aufteilt, eine Dämpfventileinrichtung (1), bestehend aus einem Dämpfventilkörper (7; 9), mit einem Hauptstufenventil (21a; 47a; 21b; 47b) pro Stromrichtung, das durch jeweils einen Hauptstufenventilkörper (21a; 21b) gebildet wird,
dadurch gekennzeichnet, daß
ein Vorstufenventil (23) die Hauptstufenventile ansteuert, daß ein regelbaren Aktuator (49; 51) eine Strömverbindung zwischen einem Steuerraum (19a; 19b) und einem Arbeitsraum beeinflußt, daß und das Hauptstufenventil vom Hauptstrom und das Vorstufenventil vom Nebenstrom in beiden Strömungsrichtungen durchströmt wird, daß der Nebenstrom im Vorstufenventil eine Rückschlagventilanordnung (31a/b) durchströmt, daß das Vorstufenventil zwei wechselweise steuerbare Steuerquerschnitte (39a/b) aufweist und der Nebenstrom richtungsabhängig einen Steuerquerschnitt und ein in Strömungsrichtung sich öffnendes Rückschlagventil (31a; 31b) passiert.

2. Schwingungsdämpfer nach Anspruch 1, dadurch gekennzeichnet, daß der Steuerquerschnitt (39a/b) des Vorstufenventils von einer Sitzfläche (55a/b) in Kombination mit einer Konusfläche (53a/b) gebildet wird und sich dem Steuerquerschnitt (39a/b) ein weiterer Durchströmquerschnitt (59) anschließt.

3. Schwingungsdämpfer nach Anspruch 2, dadurch gekennzeichnet, daß der Durchströmungsquerschnitt über den Aktuatorweg einstellbar ist.

4. Schwingungsdämpfer nach Anspruch 3, dadurch gekennzeichnet, daß zwischen den beiden Steuerquerschnitten (39a; 39b) eine Strömungsanbindung (63) zu den Rückschlagventilen (31a; 31b) vorliegt, so daß zwei Teillängen (57a; 57b) des Durchströmungsquerschnitts (59a; 59b) entstehen, die jeweils richtungsabhängig wirksam sind.

5. Schwingungsdämpfer nach Anspruch 4, dadurch gekennzeichnet, daß die beiden Teillängen (57a; 57b) der Durchströmungsquerschnitte (59a; 59b) unterschiedlich ausgebildet sind.

6. Schwingungsdämpfer nach den Ansprüchen 3 und 5, dadurch gekennzeichnet, daß die beiden Durchströmungsquerschnitte (59a; 59b) jeweils innerhalb ihrer Teillängen (57a; 57b) in Abhängigkeit des Aktuatorwegs einstellbar sind.

7. Schwingungsdämpfer nach den Ansprüchen 1 und 2, dadurch gekennzeichnet, daß bei einer mittleren Aktuatorstellung beide Steuerquerschnitte (39a/b) außer Eingriff sind und der Durchströmungsquerschnitt (59) je nach Dimensionierung für eine gewünschte Dämpfkrafteinstellung sorgt.

8. Schwingungsdämpfer nach Anspruch 1, dadurch gekennzeichnet, daß die Dämpfventileinrichtung in der elektrisch stromlosen Stellung in der Zugrichtung hart und in der Druckrichtung weich eingestellt ist.

9. Schwingungsdämpfer nach Anspruch 1, dadurch gekennzeichnet, daß sich der Nebenstrom nach dem Durchströmen eines der Rückschlagventile (31a/b) in den Steuerraum (19a/b) fortsetzt.

## Claims

1. Vibration damper having adjustable damping force, comprising a pressure tube filled with damping medium, in which a piston (5) on an axially movable piston rod (3) divides a working chamber into a piston-rod end chamber and a piston-rod remote chamber, a flow of damping medium being present between the two chambers, divided into a main flow and an auxiliary flow, a damping valve device (1) comprising a damping valve body (7; 9) with a main stage valve (21a; 47a; 21b; 47b) for each direction of flow, formed by a respective main stage valve body (21a; 21b),
characterised in that,
a pre-stage valve (23) controls the main stage valves, that a controllable actuator (49; 51) influences a flow connection between a control chamber (19a; 19b) and a working chamber, that the main stage valve has flowing through it the main flow and the pre-stage valve has flowing through it the auxiliary flow in both directions of flow, that the auxiliary flow in the pre-stage valve passes through a non-return valve arrangement (31a/b), that the pre-stage valve has two controlling cross-sections (39a/b) controlled alternately and the auxiliary flow passes, dependent on direction, a controlling cross-section and a non-return valve (31a; 31b) which opens in the direction of flow.

2. Vibration damper according to claim 1, characterised in that the controlling cross-section (39a/b) of the pre-stage valve is formed by a seating surface (55a/b) in combination with a conical face (53a/b) and the controlling cross-section (39a/b) is followed by a further through-flow cross-section (59).

3. Vibration damper according to claim 2, characterised in that the through-flow cross-section is adjustable by the travel of the actuator.

4. Vibration damper according to claim 3, characterised in that a flow link (63) to the non-return valves (31a; 31b) is present between the two controlling cross-sections (39a; 39b), so that two partial lengths (57a; 57b) of the through-flow cross-section (59a, 59b) arise, each acting dependent on direction.

5. Vibration damper according to claim 4, characterised in that the two partial lengths (57a; 57b) of the through-flow cross-sections (59a; 59b) are of different form.

6. Vibration damper according to claims 3 and 5, characterised in that the two through-flow cross-sections (59a; 59b) are each adjustable within their partial lengths (57a; 57b) depending on the actuator travel.

7. Vibration damper according to claims 1 and 2, characterised in that with the actuator in a middle position both controlling cross-sections (39a/b) are out of engagement and the through-flow cross-section (59) takes care of a desired setting of the damping force according to its dimensions.

8. Vibration damper according to claim 1, characterised in that the damping valve device in the position with no electric current is set to be hard in the extension direction and soft in the contraction direction.

9. Vibration damper according to claim 1, characterised in that the auxiliary flow continues into the control chamber (19a/b) after passage through one of the non-return valves (31a/b).

## Revendications

1. Amortisseur d'oscillations à force d'amortissement réglable, comportant un tube sous pression qui est rempli avec un fluide amortisseur et dans lequel un piston (5) sur une tige de piston (3) axialement mobile subdivise une chambre de travail en une chambre côté tige de piston et en une chambre éloignée de la tige de piston, un courant de fluide amortisseur existant entre les deux chambres de travail, qui se subdivise en un courant primaire et en un courant secondaire, et comportant un dispositif à soupape d'amortissement (1) constitué par un corps de soupape d'amortissement (7 ; 9) avec une soupape d'étage principal (21a ; 47a ; 21b ; 47b) pour chaque direction d'écoulement, qui est formée par un corps de soupape d'étage principal (21a ; 21b) respectif, caractérisé en ce qu'une soupape d'étage préliminaire (23) pilote les soupapes d'étage principal, en ce qu'un actionneur réglable (49 ; 51) influence une liaison d'écoulement entre une chambre de commande (19a ; 19b) et une chambre de travail, en ce que la soupape d'étage principal est traversée par le courant primaire et la soupape d'étage préliminaire est traversée par le courant secondaire dans les deux directions d'écoulement, en ce que le courant secondaire dans la soupape d'étage préliminaire traverse un agencement de clapet anti-retour (31a/b), en ce que la soupape d'étage préliminaire comprend deux sections transversales de commande (39a/b) à commande alternante et le courant secondaire passe en dépendance de la direction à travers une section transversale de commande et à travers un clapet anti-retour (31a ; 31b) qui s'ouvre dans la direction d'écoulement.

2. Amortisseur d'oscillations selon la revendication 1, caractérisé en ce que la section transversale de commande (39a/b) de la soupape d'étage préliminaire est formée par une surface de siège (55a/b) en combinaison avec une surface conique (53a/b), et en ce qu'une autre section transversale de passage (59) se raccorde à la section transversale de commande (39a/b).

3. Amortisseur d'oscillations selon la revendication 2, caractérisé en ce que la section transversale de passage est réglable via la course de l'actionneur.

4. Amortisseur d'oscillations selon la revendication 3, caractérisé en ce qu'un raccord d'écoulement (63) vers les clapets anti-retour (31a ; 31b) existe entre les deux sections transversales de commande (39a ; 39b), de sorte qu'il en résulte deux longueurs partielles (57a ; 57b) de la section transversale de passage (59a; 59b) qui sont chacune actives en fonction de la direction.

5. Amortisseur d'oscillations selon la revendication 4, caractérisé en ce que les deux longueurs partielles (57a ; 57b) des sections transversales de passage (59a; 59b) sont réalisées différemment.

6. Amortisseur d'oscillations selon les revendications 3 et 5, caractérisé en ce que les deux sections transversales de passage (59a ; 59b) sont réglables à l'intérieur de leurs longueurs partielles (57a ; 57b) en dépendance de la course de l'actionneur.

7. Amortisseur d'oscillations selon les revendications 1 et 2, caractérisé en ce que lorsque l'actionneur est en position moyenne, les deux sections transversales de commande (39a/b) sont dégagées l'une de l'autre et la section transversale de passage (59) assure un réglage désiré de la force d'amortissement selon le dimensionnement.

8. Amortisseur d'oscillations selon la revendication 1, caractérisé en ce que dans la position sans courant électrique, le dispositif à soupape d'amortissement est réglé dur dans la direction de traction et souple dans la direction de pression.

9. Amortisseur d'oscillations selon la revendication 1, caractérisé en ce qu'après avoir passé l'un des clapets anti-retour (31a/b), le courant secondaire se poursuit jusque dans la chambre de commande (19a/b).
